# EUROPÄISCHE PATENTANMELDUNG

(11) **EP 2 384 920 A1**
(43) Veröffentlichungstag der Anmeldung: **09.11.2011**
(21) Anmeldenummer: 11401069.7
(22) Anmeldetag: 29.04.2011
(51) Int. Cl.: B60K 11/00, A01D 34/00

(54) **Selbstfahrendes Fahrzeug und/oder Gerät**

(30) Priorität: 04.05.2010 DE 102010016765
(71) Anmelder: Amazonen-Werke H. Dreyer GmbH & Co. KG, 49205 Hasbergen (DE)
(72) Erfinder: Bahl, Benoit, 57620, Goetzenbruck (FR)

(57) **Zusammenfassung**

Selbstfahrendes Fahrzeug und/oder Gerät, insbesondere Mähgerät, mit einem sich auf Räder eines Fahrwerkes abstützenden Rahmen, einem am Rahmen angeordneten Antriebsmotor, einem Motorkühler zum Kühlen des Antriebsmotors, einer Hydraulikanlage mit zugeordneten Hydraulikflüssigkeit aufnehmenden Behälter und einem Hydraulikkühler zum Kühlen der Hydraulikflüssigkeit. Um eine verbesserte Anordnung der Kühler und besonders eine verbesserte Zugänglichkeit des Antriebsmotors und der Kühler für die Wartung sowie eine verbesserte Montage für diese Vorrichtung zu schaffen, ist vorgesehen, dass der Motorkühler (8), der Hydraulikkühler (9) und der Behälter (10) für die Hydraulikflüssigkeit mittels einer Haltevorrichtung (15) zu einer Einheit (14) zusammengefasst sind.

## Beschreibung

Die Erfindung betrifft ein selbstfahrendes Fahrzeug und/oder Gerät gemäß des Oberbegriffes des Patentanspruches 1.

Derartige selbstfahrende Fahrzeuge und/oder Geräte sind in der Praxis bekannt geworden. Sie sind beispielsweise als Mähgeräte ausgebildet. Diese Fahrzeuge und oder Geräte weisen einen Antriebsmotor, Motorkühler zum Kühlen des Antriebsmotors, eine Hydraulikkühler zum Kühlen der Hydraulikflüssigkeit und einen Behälter für die Hydraulikflüssigkeit auf. Der Antriebsmotor und diese Kühler und Behälter sind mittels einzelner Halterungen am Rahmen des Fahrzeuges und/oder Gerätes befestigt und für die Wartung meist nur schwer zugänglich.

Der Erfindung liegt die Aufgabe zu Grunde, eine verbesserte Anordnung der Kühler und besonders eine verbesserte Zugänglichkeit des Antriebsmotors und der Kühler für die Wartung sowie eine verbesserte Montage für diese Vorrichtung zu schaffen.

Diese Aufgabe wird erfindungsgemäß dadurch gelöst, dass der Motorkühler, der Hydraulikkühler und der Behälter für die Hydraulikflüssigkeit mittels einer Haltevorrichtung zu einer Einheit zusammengefasst sind. Infolge dieser Maßnahmen könne der Motorkühler, der Hydraulikkühler und der Behälter für die Hydraulikflüssigkeit zu einer vormontierten Montageeinheit zusammengefasst und somit vormontiert werden. Es ist also eine leichtere Montage möglich. Weiterhin wird hierdurch die Grundvoraussetzung geschaffen, dass die zusammengefassten Teile als Einheit für die Wartung aus dem Rahmen herausgenommen werden können, so dass die Teile dieser herausgenommenen Einheit sowie auch der Antriebsmotor besser zugänglich sind. Weiterhin wird durch diese Behälterkühlereinheit eine Vielzahl von Verbindungsleitungen und/oder lange Verbindungsleitungen eingespart. Diese Einheit baut daher sehr kompakt. Somit werden also die Wartung und Reinigungsarbeiten sowie die Zugänglichkeit für den Antriebsmotor und dem Kühler wesentlich vereinfacht und verbessert.

Eine weitere Kompaktheit lässt sich dadurch erreichen, dass der Filter für die Hydraulikflüssigkeit der Einheit zugeordnet ist.

Eine besondere Kompaktheit der Einheit aus den Kühlern und Behälter lässt sich dadurch erreichen, dass der Behälter für die Hydraulikflüssigkeit mit daran angeordneten Halteelementen die Haltevorrichtung für den Motorkühler, den Hydraulikkühler und den Filter für die Hydraulikflüssigkeit bildet. Hierbei bildete der Behälter quasi die Haltevorrichtung für die Kühler.

Eine besonders einfache und leichte Verlagerung der Einheit lässt sich dadurch erreichen, dass die Haltevorrichtung mittels einer Gelenkvorrichtung an dem Tragrahmen angeordnet ist, dass die Gelenkvorrichtung zumindest eine vorzugsweise aufrechte Schwenkachse aufweist, dass die Einheit um die Schwenkachse aus der Betriebsposition innerhalb der Gerätekontur nach außerhalb des Gerätekontur in eine Wartungsposition verbringbar ist. Hierbei kann die Schwenkachse der Gelenkvorrichtung sowohl aufrecht wie auch liegend angeordnet sein.

Eine besonders einfache Anordnung von Hydraulikkühler und Motorkühler ergibt sich dadurch, dass der Motorkühler und der Hydraulikkühler an dem Behälter für die Hydraulikflüssigkeit befestigt sind.

Eine vorteilhafte kompakte Anordnung der Kühlereinheit lässt sich dadurch erreichen, dass der Motorkühler und der Hydraulikkühler direkt oder mit einem kleinen Abstand zueinander unmittelbar vor einander angeordnet sind.

Auch ist es möglich, dass der Motorkühler unter der Hydraulikkühler als kombiniertes Kühlerelement ausgebildet sind.

Um die Filtervorrichtung möglichst einfach und ohne große und lange Schlauchverbindungen der Einheit zuordnen zu können, ist vorgesehen, dass die Filtervorrichtung zur Filterung der Hydraulikflüssigkeit dem Behälter für die Aufnahme der Hydraulikflüssigkeit zugeordnet ist.

Weitere Einzelheiten der Erfindung sind der Beispielsbeschreibung und den Zeichnungen zu entnehmen.

Hierbei zeigen
- Fig. 1: das selbstfahrende Fahrzeug und oder Gerät in perspektivischer Darstellung,
- Fig. 2: das selbstfahrende Fahrzeug und oder Gerät in perspektivischer Darstellung, mit der herausgeklappten Kühlereinheit und
- Fig. 3: die Kühlereinheit in perspektivischer Darstellung und vergrößerten Maßstab.

Das selbstfahrende Fahrzeug und/oder Gerät ist als selbst Mäh-, Vertikutier-, Sammel- und/oder Kehrgerät ausgebildet. Sie weist den Rahmen 1 auf, der sich über die Antriebsräder 2 und die Laufräder 3 auf dem Boden abstützt. Im vorderen Bereich ist das als Aufnahmevorrichtung ausgebildete Arbeitswerkzeug an dem das Gehäuse aufweisenden Rahmen 1 angeordnet. Die Aufnahmevorrichtung nimmt das aufzusammelnde Gut auf und fördert es über eine nicht dargestellte angetriebene Transportvorrichtung in den sich an dem Gehäuse anschließenden Sammelbehälter 4. Der Sammelbehälter 4 weist auf seiner Oberseite eine Entleerungsöffnung auf, die durch einen als Klappe ausgebildete Deckel 5 abgedeckt ist. Der Deckel 5 ist mittels Gelenken, die eine quer zur Fahrtrichtung verlaufende Schwenkachse aufweisen, an den Wänden des Sammelbehälters 4 im vorderen oberen Bereich aufschwenkbar angelenkt. Der Sammelbehälter 4 ist mittels einer Schwenk- und Hebevorrichtung 6 am Rahmen 1 der Sammelmaschine befestigt. Zum Entleeren des Sammelbehälters 4 kann dieser mittels der Schwenk- und Hebevorrichtung 6, der motorische Betätigungsmittel zugeordnet sind, angehoben und nach hinten verschwenkt werden. Die Verschwenkung erfolgt in der Art, dass die Entleerungsöffnung zumindest teilweise nach unten weist.

Das selbstfahrende Fahrzeug und/oder Gerät weist zu seinem Antrieb einen innerhalb des Rahmens 1 und Gehäuses angeordneten Antriebsmotor 7 auf. Dieser Antriebsmotor 7 ist am Rahmen 1 angeordnet. Dem Antriebsmotor 7 ist ein Motorkühler 8 zum kühlen des Antriebsmotors 7 zugeordnet. Weiterhin weist das selbstfahrende Fahrzeug und/oder Gerät eine Hydraulikanlage auf. Dieser Hydraulikanlage ist ein Hydraulikkühler 9 zum kühlen der Hydraulikflüssigkeit zugeordnet. Die Hydraulikflüssigkeit wird in einem Behälter 10 vor gehalten.

An dem Behälter 10 für die Hydraulikflüssigkeit sind Halteelemente 11 angeordnet. Mit diesen Halteelementen 11 wird der Behälter 10 für die Hydraulikflüssigkeit mittels einer Gelenkvorrichtung 12 an dem Tragrahmen 1 verschwenkbar angeordnet. An dem Behälter 10 für die Hydraulikflüssigkeit sind, wie die Zeichnungen zeigen, der Motorkühler 8, der Hydraulikkühler 9 und der Filter 13 für die Hydraulikflüssigkeit zu einer Einheit 14 zusammengefasst, angeordnet, wobei der Behälter 10 für die Hydraulikflüssigkeit die Haltevorrichtung 15 für diese Einheit 14 bildet. Somit bildet der Behälter 10 für die Hydraulikflüssigkeit mit den daran angeordneten Halteelementen 11 die Haltevorrichtung 15 für den Motorkühler 8, den Hydraulikkühler 9 und den Filter 13 für die Hydraulikflüssigkeit.

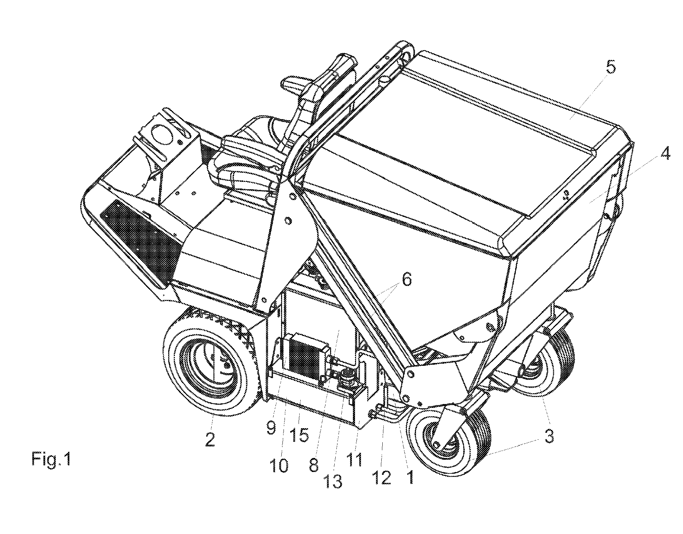

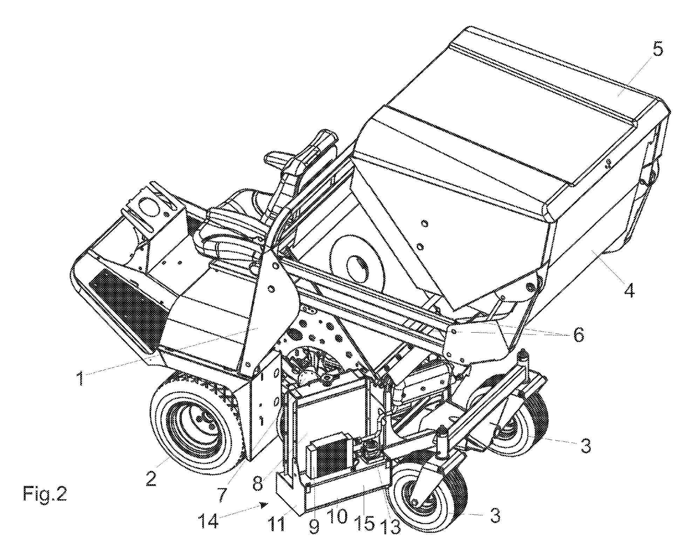

Dadurch, dass die Haltevorrichtung 15 mittels einer Gelenkvorrichtung 12 an dem Tragrahmen 1 angeordnet ist, wobei die Gelenkvorrichtung 12 im Ausführungsbeispiel eine aufrechte Schwenkachse 16 aufweist, kann die Einheit 14 um die Schwenkachse 16 aus der Betriebsposition innerhalb der Gerätekontur, wie in Fig. 1 gezeigt ist, nach außerhalb der Gerätekontur in eine Wartungsposition verbracht werden, wie Fig. 2 gezeigt ist.

Wenn die Einheit 14 in die in Fig. 2 dargestellte Wartungsposition verbracht ist, sind sowohl der Motorkühler 8 und Hydraulikkühler 9 sowie der Antriebsmotor 7 bzw. an dem Antriebsmotor 7 angeordnete Elemente leichter und bequemer zugänglich. Die Wartung wird hierdurch wesentlich vereinfacht.

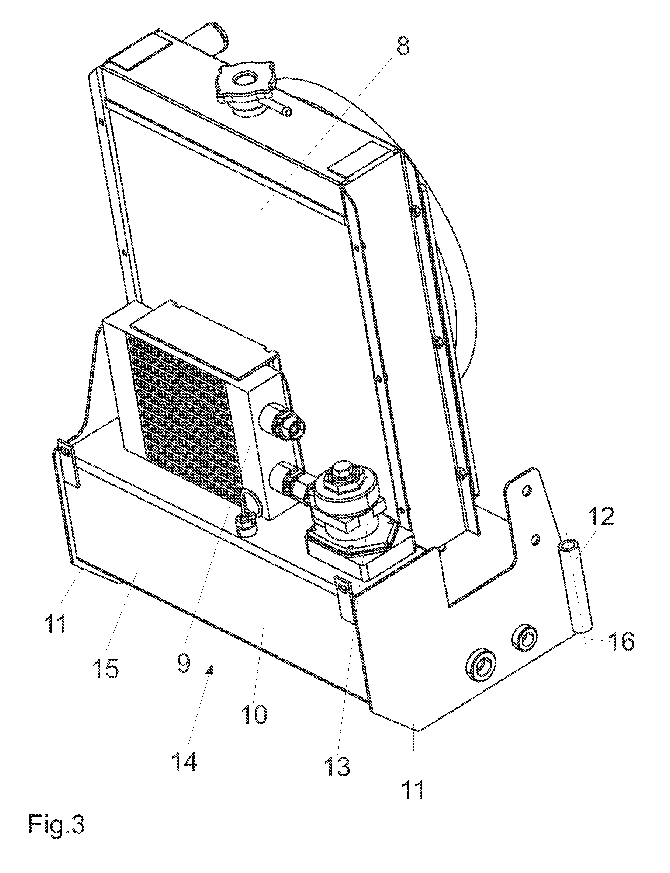

Wie die Zeichnungen, insbesondere Fig. 3 zeigt sind in der Motorkühler 8 und Hydraulikkühler 9 direkt oder mit einem kleinen Abstand zueinander unmittelbar vor einander angeordnet. Hierbei können der Motorkühler 8 und Hydraulikkühler 9 als kombiniertes Kühlerelement ausgebildet sein.

Falls dem Antriebsmotor 7 ein Ladeluftkühler zugeordnet ist, wird dieser sinnvoller Weise auch an dem Behälter für die Hydraulikflüssigkeit bzw. der Haltevorrichtung angeordnet, so dass der Ladeluftkühler auch der verschwenkbaren Einheit 14 zugeordnet ist.

Es sei darauf hingewiesen, dass anstelle der Gelenkvorrichtung 12, die eine aufrechte Achse 16 aufweist, auch eine Gelenkvorrichtung vorgesehen sein kann, welche eine liegende oder schräge Achse aufweist, um welche die die Kühler 8, 9 und den Behälter 10 aufweisende Einheit 14 verschwenkbar angeordnet ist.

## Patentansprüche

1. Selbstfahrendes Fahrzeug und/oder Gerät, insbesondere Mähgerät, mit einem sich auf Räder eines Fahrwerkes abstützenden Rahmen, einem am Rahmen angeordneten Antriebsmotor, einem Motorkühler zum Kühlen des Antriebsmotors, einer Hydraulikanlage mit zugeordneten Hydraulikflüssigkeit aufnehmenden Behälter und einem Hydraulikkühler zum Kühlen der Hydraulikflüssigkeit, **dadurch gekennzeichnet, dass** der Motorkühler (8), der Hydraulikkühler (9) und der Behälter (10) für die Hydraulikflüssigkeit mittels einer Haltevorrichtung (15) zu einer Einheit (14) zusammengefasst sind.

2. Fahrzeug und/oder Gerät nach Anspruch 1, **dadurch gekennzeichnet, dass** der Filter (13) für die Hydraulikflüssigkeit der Einheit (14) zugeordnet ist.

3. Fahrzeug und/oder Gerät nach zumindest einem der vorstehenden Ansprüche, **dadurch gekennzeichnet, dass** der Behälter (10) für die Hydraulikflüssigkeit mit daran angeordneten Halteelementen (11) die Haltevorrichtung (15) für den Motorkühler (8), den Hydraulikkühler (9) und den Filter (13) für die Hydraulikflüssigkeit bildet.

4. Fahrzeug und/oder Gerät nach zumindest einem der vorstehenden Ansprüche, **dadurch gekennzeichnet, dass** die Haltevorrichtung (15) mittels einer Gelenkvorrichtung (12) an dem Tragrahmen (1) angeordnet ist, dass die Gelenkvorrichtung (12) zumindest eine vorzugsweise aufrechte Schwenkachse (16) aufweist, dass die Einheit (14) um die Schwenkachse (16) aus der Betriebsposition innerhalb der Gerätekontur nach außerhalb des Gerätekontur in eine Wartungsposition verbringbar ist.

5. Fahrzeug und/oder Gerät nach zumindest einem der vorstehenden Ansprüche, **dadurch gekennzeichnet, dass** der Motorkühler (8) und der Hydraulikkühler (9) an dem Behälter (10) für die Hydraulikflüssigkeit befestigt sind.

6. Fahrzeug und/oder Gerät nach zumindest einem der vorstehenden Ansprüche, **dadurch gekennzeichnet, dass** der Motorkühler (8) und der Hydraulikkühler (9) direkt oder mit einem kleinen Abstand zueinander unmittelbar vor einander angeordnet sind.

7. Fahrzeug und/oder Gerät nach zumindest einem der vorstehenden Ansprüche, **dadurch gekennzeichnet, dass** der Motorkühler (8) und der der Hydraulikkühler (9) als kombiniertes Kühlerelement ausgebildet sind.

8. Fahrzeug und/oder Gerät nach zumindest einem der vorstehenden Ansprüche, **dadurch gekennzeichnet, dass** die Filtervorrichtung (13) zur Filterung der Hydraulikflüssigkeit dem Behälter (10) für die Aufnahme der Hydraulikflüssigkeit zugeordnet ist.
